# EUROPÄISCHE PATENTANMELDUNG

(11) **EP 0 637 577 A2**
(43) Veröffentlichungstag der Anmeldung: **08.02.1995**
(21) Anmeldenummer: 94111014.0
(22) Anmeldetag: 15.07.1994
(51) Int. Cl.: C05F 3/00, A01C 3/00

(54) **Verfahren und Mittel zur Verminderung der Gasemission aus Gülle**

(30) Priorität: 06.08.1993 AT 1569/93
(71) Anmelder: Agrolinz Melamin GmbH, A-4021 Linz (AT)
(72) Erfinder: Hohenwarter, Karl, Dr., A-4020 Linz (AT); Hofmair, Wolfgang, Dipl.-Ing., A-4600 Wels (AT)
(74) Vertreter: Kunz, Ekkehard, Dr.

(57) **Zusammenfassung**

Verfahren zur Verminderung der Gasemission aus Gülle durch Zusatz einer wirksamen Menge eines Bakterizids und eines oder mehrerer Salze der Salpetersäure und ein Mittel zur Verminderung der Gasemission aus Gülle, das diese Zusätze in einer wirksamen Menge enthält.

## Beschreibung

Durch die Massentierhaltung fallen ungeheure Mengen an Gülle von Rindern, Schweinen und Geflügel und auch Brüdenwässer an. Wie aus European Fertilizer Manufactorers Association, September 1991, pp. 1 - 8 hervorgeht, gehen große Mengen des in der Gülle enthaltenen Stickstoffes in Form von Ammoniak, der in die Atmosphäre entweicht, verloren. Dadurch verarmt die Gülle an Stickstoff, sodaß sie keine besonders guten Düngereigenschaften mehr besitzt. Außerdem belastet Ammoniak die Umwelt und insbesonders das Stallklima beträchtlich. Ferner ist beispielsweise aus dem Beitrag zur öffentlichen Anhörung der Enquete-Komission "Schutz der Erdatmosphäre" am 25. und 26. 11. 1991 in Bonn, Deutschland von K. Isermann "Anteile der Landwirtschaft an der Emission klimarelevanter Spurengase und ursachenorientierte Lösungsansätze zu ihrer hinreichenden Verminderung" bekannt, daß aus Gülle auch beträchtliche Mengen an CO₂ entweichen.

Zur Verminderung der Ammoniakemission aus Gülle ist in EP-A 0 370 565 vorgeschlagen, der Gülle Salpeter- und/oder Schwefelsäure und ein oxidierendes Reagens, wie H₂O₂ zuzusetzen, wodurch gleichzeitig der Stickstoffgehalt der Gülle konstant gehalten werden soll.
Da die Gasemissionen möglichst schon im Tierstall vermindert werden sollen, ist aber der Zusatz von Salpeter- und/oder Schwefelsäure zu Gülle aus Sicherheitsgründen für Mensch und Tier bedenklich. Außerdem greifen diese Säuren auch den Stallboden oder die Wände einer Güllesammeleinrichtung an.

Es wurde nun unerwarteterweise gefunden, daß man die Emission von Ammoniak aus Gülle vermindern kann, wenn man der Gülle ein Bakterizid und ein Salz der Salpetersäure zusetzt. Dadurch wird die Ammoniakemission überraschend wirkungsvoll eingeschränkt, sodaß das Stallklima verbessert wird und die guten Düngeeigenschaffen der Gülle selbst bezüglich des Stickstoffgehaltes im wesentlichen erhalten bleiben. Außerdem wird die Umweltbelastung durch Abgasung vermindert, da neben Ammoniak als Nitrat auch entweichendes CO₂ als Carbonat gebunden werden kann und der Stallboden bleibt intakt.

Gegenstand der Erfindung ist daher ein Verfahren zur Verminderung der Gasemission aus Gülle, das dadurch gekennzeichnet ist, daß der Gülle eine wirksame Menge eines Bakterizides und eines oder mehrerer Salze der Salpetersäure zugesetzt werden.

Unter einem Bakterizid ist ein Mittel zu verstehen, das befähigt ist, das Bakterienwachstum in der Gülle zu hemmen, oder Bakterien, die in der Gülle vorhanden sind, abzutöten. Bevorzugt wird als Bakterizid ein Mittel eingesetzt, das befähigt ist, Bakterien abzutöten. Solche Mittel, wie etwa Hexamethylentetramin (Urotropin), 1-Cyanguanidin (Dicyandiamid), 2-Chloro-(6-trichloromethyl)-pyridin (Nitrapyrin), Thiosulfate, Kupfersulfat, H₂O₂ sind bekannt.
Die optimale Aufwandmenge des Bakterizids hängt dabei von der Art der Gülle und von der chemischen Beschaffenheit und Wirksamkeit des Bakterizids ab und ist für jeden Einzelfall leicht durch Vorversuche zu bestimmen. Im Fall von Schweinegülle hat sich gezeigt, daß bei Verwendung von Urotropin eine Aufwandmenge von etwa 0,001 bis etwa 0,1 Gew%, bei Verwendung von Dicyandiamid von etwa 0,05 bis etwa 0,5 Gew% bezogen auf das Gewicht der Gülle im allgemeinen ausreichend sind, um das Wachstum der Bakterien zu hemmen bzw. um die Bakterien abzutöten.

Die Salze der Salpetersäure, die mit zahlreichen Metallen gebildet werden können, sind Nitrate. Da auch in Metallkomplexen, die Nitratliganden enthalten sowohl Nitrat, als auch Metallionen enthalten sind, sollen unter Salze der Salpetersäure auch Metallkomplexe, die Nitratliganden enthalten, verstanden werden. Als besonders vorteilhaft für das erfindungsgemäße Verfahren hat sich die Verwendung eines Salzes der Salpetersäure oder eines Metallkomplexes, der Nitratliganden enthält, das oder der ein Metallion enthält, das nicht nur zur Nitratbildung, sondern auch zur Carbonatbildung befähigt ist, herausgestellt. Bei Einsatz solcher Verbindungen können nämlich die Metallionen mit entweichendem CO₂ reagieren und dieses als Carbonat binden. Bevorzugt sind Nitratsalze, wobei Nitrate der Alkali- und Erdalkalimetalle, im besonderen Natrium-, Kalium-, Magnesium-, Calciumnitrat besonders bevorzugt sind. Ein ganz besonders bevorzugtes Nitrat ist Calciumnitrat. Das Nitratsalz kann dabei auch hydratisiert vorliegen, wie dies beispielsweise in Calciumnitrat-tetrahydrat der Fall ist.

Das Salz der Salpetersäure wird in einer Aufwandmenge von etwa mindestens 0,05 Gew% bezogen auf das Gewicht der Gülle in die Gülle eingebracht. Die optimale Aufwandmenge, die von der Herkunft und dem Alter der Gülle abhängig ist, kann durch Vorversuche leicht ermittelt werden. Bei Schweinegülle hat sich gezeigt, daß Aufwandmengen von etwa 0,5 bis 10 Gew% die Gasemission befriedigend vermindern.

Das Salz und/oder das Bakterizid kann dabei fest oder gelöst oder suspendiert in einem Lösungs- oder Verdünnungsmittel zugegeben werden. Als Lösungsmittel wird bevorzugt Wasser eingesetzt, als Verdünnungsmittel können übliche organische Verdünnungsmittel wie Ketone, Alkohole, aliphatische Kohlenwasserstoffe, Ether verwendet werden. Bevorzugt wird das Salz wegen der besseren Durchmischbarkeit mit der Gülle in Wasser gelöst zugegeben.

Das Bakterizid und das Salz der Salpetersäure können der Gülle getrennt oder gemeinsam zugegeben werden. Bevorzugt werden sie gemeinsam, beispielsweise in Form eines Mittels zugegeben. Ein solches Mittel ist ebenfalls Gegenstand der Erfindung. Das Mittel kann dabei nur die festen Wirkstoffe und gegebenenfalls ein Lösungs- oder Verdünnungsmittel enthalten, oder das Mittel enthält daneben übliche Formulierungshilfsstoffe. In diesem Fall wird das Mittel in bekannter Weise formuliert, z.B. durch Vermischen der Wirkstoffe mit Streckmitteln, also flüssigen Lösungsmitteln, und/oder festen Trägerstoffen, gegebenenfalls unter Verwendung von Tensiden, also Emulgatoren und/oder Dispergier- und/oder Netzmitteln und/oder schaumerzeugenden Mitteln und/oder suspensionsstabilisierenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen Wasser oder Alkohole, wie Ethanol, Butanol, Isopropanol oder Glykol, sowie deren Ether und Ester in Frage. Als feste Trägerstoffe kommen in Frage: z.B. natürliche Gesteinsmehle, wie Kaoline, Tonerde, Talkum, Kreide, Quarz, Attapulgit, Montmorillonit oder Diatomeenerde und synthetische Produkte wie hochdisperse Kieselsäure, Aluminiumoxid und Silikate; als feste Trägestoffe für Granulate kommen in Frage: z.B. gebrochene und fraktionierte natürliche Gesteine, wie Calcit, Marmor, Bims, Sepiolith, Dolomit sowie synthetische Granulate aus anorganischen und organischen Mehlen, sowie Granulate aus organischem Material, wie Sägemehl, Kokosnuß-Schalen, Maiskolben und Tabakstengel; als Emulgiermittel und/oder oberflächenaktives Mittel kommen in Frage: z.B. nichtionogene und ionogene Tenside, wie Polyoxyethylen-Sorbitan-Tallölester, Na-Oleylmethyltaurid, Polyoxyethylen-Fettsäure-Ester, Polyoxyethylen-Fettalkoholether, z.B. Alkylarylpolyglykolether, Alkylsulfonate, Alkylsulfate, Arylsulfate und Arylalkylsulfonate sowie Eiweißhydrolysate. Als Netzmittel können etwa polyoxyethylierte Alkylphenole, polyoxethylierte Oleyl- oder Stearylamine, Alkyl- oder Alkylphenylsulfonate eingesetzt werden. Als Dispergiermittel kommen in Frage: z.B. Ligninsulfonate, Kondensationsprodukte von Arylsulfonaten mit Formaldehyd. Als suspensionsstabilisierende Mittel finden im wesentlichen Tonminerale wie Attapulgit Verwendung.
Es können Haft- und Verdickungsmittel wie Carboxymethylcellulose, Methylcellulose, natürliche und synthetische pulvrige, körnige und latexförmige Polymere verwendet werden, wie Gummi arabicum, Polyvinylalkohol, Polyvinylacetat.
Das Mittel kann ferner geruchsbindende oder geruchsverhindernde Stoffe, wie Rapsöl, Melasse, organische Säuren, Gülleduftmittel, und, je nach Anwendungsgebiet, auch zusätzliche Düngestoffe, wie Phosphat, Kalium, Spurennährstoffe, wie Salze von Eisen, Mangan, Bor, Kupfer, Kobalt, Molybdän und Zink enthalten.
Es können auch Farbstoffe, wie anorganische Pigmente, z.B. Eisenoxid, Titanoxid, Ferrocyanblau und organische Farbstoffe, wie Alizarin-, Azo- und Metallphthalocyaninfarbstoffe zugesetzt werden.

Das Mittel enthält im allgemeinen zwischen 5 und 100%, Wirkstoffe, wobei der Anteil des Bakterizids von dessen Wirksamkeit abhängig ist und im allgemeinen höchstens 20 Gew%, bezogen auf das Gewicht der Wirkstoffe, beträgt.

Die Wirkstoffe können als solche, in Form ihrer Formulierungen oder aus daraus durch weiteres Verdünnen bereiteten Anwendungsformen, wie gebrauchsfertige Lösungen, Emulsionen, Suspensionen, Pulver, Pasten und Granulate angewendet werden. Benetzbare Pulver sind im Wasser gleichmäßig dispergierbare Präparate, die neben den Wirkstoffen außer gegebenenfalls Verdünnungs- bzw. Inertstoffen noch Netzmittel enthalten können. Emulgierbare Konzentrate können beispielsweise durch Auflösen der Wirkstoffe in einem organischen Lösungsmittel unter Zusatz von einem oder mehreren Emulgiermitteln hergestellt werden. Stäubemittel werden durch Vermahlen der Wirkstoffe gegebenenfalls mit fein verteilten festen Trägerstoffen erhalten.
Das Mittel kann in Konzentrationen von 5 bis 100 % bezogen auf die Wirkstoffe angewendet werden und wird bevorzugt in Konzentrationen von 50 bis 85 Gew.% angewandt.
Die Anwendung erfolgt zweckmäßig bereits im Tierstall, wobei die Wirkstoffe oder das, diese enthaltende Mittel gegebenenfalls nach Auflösen in Wasser und/oder Verdünnung auf die gewünschte Anwendungskonzentration in die dafür vorgesehen Güllebehältnisse beispielsweise eingestreut oder eingesprüht werden. Die Anwendung kann aber auch durch Einmischen der Wirkstoffe oder eines, diese enthaltenden Mittels, in die gesammelte Gülle, etwa in einen Güllesammelbehälter und Durchrühren der Mischung erfolgen.

Beim Kontakt der Gülle mit dem Salz der Salpetersäure und dem Bakterizid bildet sich eine Ammoniumnitratlösung, in der das Ammoniumion stabilisiert ist, sodaß die Menge des entweichenden Ammoniaks verringert wird. Ist das Metallion des Salzes der Salpetersäure auch zur Bildung eines Carbonates befähigt, kann entweichendes CO₂ gleichzeitig als Carbonat gebunden werden. Dadurch wird die Gasemission aus der Gülle wirksam vermindert. Die Anwesenheit des Bakterizids ohne Salz der Salpetersäure oder die Anwesenheit eines Salzes der Salpetersäure ohne Bakterizid ist aber nicht geeignet, die Ammoniakemission zu vermindern. Aus einer Gülleprobe, der Calciumnitrat und Urotropin zugegeben wurden, wurden in einem Langzeitversuch nur etwa 30%, aus der Gülle allein oder aus einer Gülleprobe, der nur Urotropin oder der nur ein Salz der Salpetersäure zugegeben wurde, aber etwa 90% des als Ammonium vorliegenden Stickstoffs freigesetzt.
In Gülleproben, denen Calciumnitrat zugegeben wurden, fiel sichtbar Calciumcarbonat aus, der Beweis, daß CO₂ wirksam gebunden wurde.

Die Gülle, in der Ammoniak und gegebenenfalls CO₂ durch das erfindungsgemäße Verfahren als Nitrat bzw, Carbonat gebunden sind, kann anschließend als solche als Dünger gelagert und verwendet oder einem gülleverarbeitendem Prozeß zur Herstellung eines festen Düngers unterworfen werden. Solche Prozesse sind Gegenstand zahlreicher bekannter Verfahren und bedürfen keiner näheren Erläuterung.

Durch das erfindungsgemäße Verfahren wird die Emission von Ammoniak und CO₂ aus Gülle wirksam vermindert. Außerdem hat sich gezeigt, daß durch Vorgabe des Bakterizids und des Salzes der Salpetersäure in das Güllebehältnis die Bildung der sonst üblichen Schwimmdecke vorteilhafterweise vermindert wird. Das Verfahren stellt daher eine Bereicherung der Technik dar.

### Beispiel 1

100 g frische Schweinegülle wurden
a. unbehandelt
b. vermischt mit 4,8 g einer wäßrigen, 83,3 Gew.%igen CaNO₃.4H₂O Lösung
c. vermischt mit 4,8 g einer wäßrigen, 83,3 Gew.%igen CaNO₃.4H₂O Lösung, die 3 Gew.% H₂O₂ enthielt
d. vermischt mit 4,8 g einer wäßrigen, 83,3 Gew.%igen CaNO₃.4H₂O Lösung, die 3 mg CuSO₄ enthielt
14 Tage und weitere 7 Tage in einem Wasserbad bei 35°C unter leichtem, oberflächlichen Durchsatz von angefeuchteter Luft stehen gelassen. Der Stickstoffgehalt der Ansätze a. bis d. wurde mit Hilfe eines Autoanalyzer II der Firma Technicon mit internem Standard analysiert. Ansatz a. enthielt am Beginn des Versuches 0,46 Gew.% Stickstoff in Form von Ammoniumstickstoff (N-NH₃) und 0,0 Gew.% Stickstoff in Form von Nitratstickstoff (N-NO₃), die Ansätze b. bis d. 0,46 Gew.% N-NH₃ und 0,44 Gew.% N-NO₃. Nach 14 Tagen wurden die in Tabelle 1 zusammengestellten Ergebnisse erhalten:

**Tabelle 1**

| | a. | b. | c. | d. |
|---|---|---|---|---|
| N-NH₃ | 0,04 | 0,06 | 0,17 | 0,13 |
| N-NO₃ | 0,00 | 0,01 | 0,21 | 0,18 |

Die Ergebnisse, die nach 14 Tagen erhalten wurden, blieben nach einer weiteren Woche Versuchsdauer im wesentlichen unverändert. In Ansatz a. waren also 9 %, in Ansatz b. 13 %, in Ansatz c. 37 % und in Ansatz d. 28 % des ursprünglichen N-NH₃ Gehaltes in der Gülle erhalten geblieben.

### Beispiel 2

Wurde wie Beispiel 1 durchgeführt, wobei aber folgende Güllemischungen, ausgehend von 100 g frischer Schweinegülle hergestellt wurden:
a. vermischt mit 41 mg Urotropin
b. vermischt mit 4,8 g einer wäßrigen, 83,3 Gew.%igen CaNO₃.4H₂O Lösung, die 7 mg Urotropin enthielt
c. vermischt mit 4,8 g einer wäßrigen, 83,3 Gew.%igen CaNO₃.4H₂O Lösung, die 0,2 ml Didin flüssig enthielt
Am Beginn des Versuches enthielt Ansatz a. 0,52 Gew.% N-NH₃ und 0,0 Gew.% N-NO₃, die Ansätze b. und c. 0,57 Gew.% N-NH₃ und 0,52 Gew.% N-NO₃. Nach 7 und nach 14 Tagen wurden die in Tabelle 2 zusammengestellten Werte erhalten. Didin flüssig ist ein bekanntes Bakterizid der Firma SKW Trostberg AG, Deutschland und enthält 1-Cyanguanidin, Ammoniumthiosulfat, Ammoniumphosphat.

**Tabelle 2**

| | a. | b. | c. |
|---|---|---|---|
| N-NH₃ (7) | 0,13 | 0,50 | 0,46 |
| N-NO₃ (7) | 0,00 | 0,49 | 0,46 |
| N-NH₃ (14) | 0,04 | 0,40 | 0,40 |
| N-NO₃ (14) | 0,00 | 0,33 | 0,39 |

In Ansatz a. waren also nach einer Woche 25 %, in Ansatz b. 88 %, in Ansatz c. 81 % und nach 14 Tagen in Ansatz a. 8 %, in den Ansätzen b. und c. dagegen noch 70 % des ursprünglichen N-NH3 in der Gülle erhalten geblieben. In den Ansätzen b. und c. wurde ferner Calciumcarbonat nachgewiesen.
Diese Ergebnisse blieben nach einer weiteren Woche Versuchsdauer im wesentlichen unverändert.

## Patentansprüche

1. Verfahren zur Verminderung der Gasemission aus Gülle, dadurch gekennzeichnet, daß der Gülle eine wirksame Menge eines Bakterizides und eines oder mehrerer Salze der Salpetersäure zugesetzt werden.

2. Verfahren nach Anspruch 1, dadurch gekennzeichnet, daß als Bakterizid Hexamethylentetramin und/oder 1-Cyanguanidin und/oder 2-Chloro-(6-trichloromethyl)-pyridin und/oder H₂O₂ und/oder Thiosulfate und/oder Kupfersulfat zugesetzt werden.

3. Verfahren nach einem der Ansprüche 1 oder 2, dadurch gekennzeichnet, daß als Salz der Salpetersäure ein Metallnitrat, dessen Metallion auch befähigt ist, ein Carbonat zu bilden, eingesetzt wird.

4. Verfahren nach einem der Ansprüche 1 bis 3, dadurch gekennzeichnet, daß als Salz der Salpetersäure ein Alkalimetall- oder Erdalkalimetallnitrat eingesetzt wird.

5. Verfahren nach einem der Ansprüche 1 bis 4, dadurch gekennzeichnet, daß das Salz der Salpetersäure als Hydrat eingesetzt wird.

6. Verfahren nach einem der Ansprüche 1 bis 5, dadurch gekennzeichnet, daß das Bakterizid in einer Menge von 0,001 bis 0,5 Gew.% bezogen auf das Gewicht der Gülle eingesetzt wird.

7. Verfahren nach einem der Ansprüche 1 bis 6, dadurch gekennzeichnet, daß das Salz der Salpetersäure in einer Menge von mindestens 0,05 Gew.% bezogen auf das Gewicht der Gülle eingesetzt wird.

8. Verfahren nach einem der Ansprüche 1 bis 7, dadurch gekennzeichnet, daß das Bakterizid und das Salz der Salpetersäure der Gülle in Form einer Formulierung zusammen mit üblichen Formulierungshilfsstoffen zugesetzt werden.

9. Verfahren nach einem der Ansprüche 1 bis 8, dadurch gekennzeichnet, daß der Gülle zusätzlich geruchsbindende Stoffe und/oder Düngestoffe zugesetzt werden.

10. Mittel zur Verminderung der Gasemission aus Gülle, dadurch gekennzeichnet, daß das Mittel eine wirksame Menge eines Bakterizids und eines oder mehrerer Salze der Salpetersäure enthält.
